# EUROPEAN PATENT APPLICATION

(11) **EP 1 508 513 A1**
(43) Date of publication of application: **23.02.2005**
(21) Application number: 04077365.7
(22) Date of filing: 20.08.2004
(51) Int. Cl.: B62J 6/02, B62J 6/04, B62J 6/16, B60Q 1/30

(54) **Bicycle, a remote control, an assembly of a remote control and at least one bicycle light, and a handlebar**

(30) Priority: 22.08.2003 NL 1024153
(71) Applicant: STENMAN HOLLAND B.V., 3903 AV Veenendaal (NL)
(72) Inventor: Stunnebrink, Marco Dimphina Henricus, 6862 GR Oosterbeek (NL)
(74) Representative: Winckels, Johannes Hubertus F.

(57) **Abstract**

A bicycle provided with at least one bicycle light (12, 13) and a wireless remote control (4), wherein said bicycle light (12, 13) is designed to be controlled by said wireless remote control (4), while said remote control (4) is located at a position on the bicycle (1) such that the remote control (4) is reachable for a cyclist present on the seat (9) of the bicycle (1).
Further, the invention provides a remote control of such a bicycle (1), the remote control preferably being provided with coupling means, to be detachably coupled to a bicycle. The invention further provides an assembly of a remote control (4) and at least one bicycle light (12, 13) which bicycle light is designed to be controlled by said wireless remote control (4). The invention further provides a handlebar provided with such a remote control.

## Description

The invention relates to a bicycle provided with at least one bicycle light and a wireless remote control, the bicycle light being designed to be controlled by this wireless remote control.

From Dutch publication NL 9400218, a bicycle lighting system is known, which system is provided with a headlight and a rear light. Moreover, the known lighting system is provided with a transmitter coupled to the headlight. The rear light is provided with a receiver. The transmitter automatically activates the rear light via said receiver when the headlight is activated by providing the headlight with supply voltage. A drawback of this known bicycle lighting system is that activating the bicycle lights is relatively laborious and cannot, for instance, be carried out while cycling.

The object of the present invention is to provide an improvement of the bicycle, while the at least one bicycle light can be controlled remotely relatively easily.

To this end, the bicycle according to the invention is characterized by the features of claim 1.

According to the invention, the remote control is provided at a position on the bicycle such, that the remote control can be reached by a cyclist present on the seat of the bicycle. Therefore, the cyclist can operate the at least one bicycle light in a simple and safe manner while cycling. Preferably, the position of the remote control is a position on a handlebar of the bicycle, so that during cycling, the cyclist can manually operate the remote control without him, to that end, having to make awkward or dangerous movements. Furthermore, by providing the handlebar with the remote control, the handlebar obtains an additional functionality, which makes the use of the handlebar more comfortable and, moreover, pleasant. Another position which is relatively easily reached during cycling can for instance be offered by a frame of the bicycle, in particular a frame part extending between the seat and the handlebar.

It is noted that US patent 6,067,010 relates to an auxiliary warning lamp system for a vehicle. This warning system serves for making the vehicle especially well visible in a fog, since, according to US 6,067,010, the normal brake light or indicator is no longer properly visible in a fog. The auxiliary system is provided with a light bar with a large number of lamps. With the system in stand-by condition, the lamps of the lighting system function as a 'thunderclap' warning lamp. When the vehicle brakes or makes a turn, the order in which the lamps are activated is automatically adjusted by a remote control. From US 6,067,010 it is not known that this remote control is provided on the bicycle on a location such that the remote control is reachable by a cyclist present on the seat of the bicycle.

According to the present invention, it is advantageous when the bicycle is provided with at least two bicycle lights, in particular a headlight and a rear light, which can each be wirelessly controlled by the remote control. As a result, as desired, these bicycle lights can simply be controlled from the cyclist position in a wireless, comfortable and safe manner. What can thus, for instance, be prevented is that cyclists need to dismount to switch the bicycle lights on, or deactivate them again.

The invention further provides a remote control which is characterized by the features of claim 20. When mounted, this remote control can offer a bicycle the above-mentioned advantages. Preferably, the remote control is provided with coupling means for detachably coupling the remote control to the bicycle. As a result, after use of the bicycle, the remote control can be uncoupled and taken along to a safe place, in particular to prevent it from being stolen. Moreover, in this manner, the user can couple the remote control to the bicycle at a desired location the user can reach well. Preferably, the coupling means are designed to couple the remote control to the handlebar, which offers the above-mentioned advantages. The handlebar can also be provided, at least partly, with such coupling means.

Further, the invention provides an assembly characterized by the features of claim 22. This assembly, which is in particular provided with a headlight and a rear light, can for instance be supplied separately from a bicycle, to be mounted on a bicycle not yet provided with such an assembly.

Further elaborations of the invention are described in the subclaims. Presently, the invention will be clarified with reference to an exemplary embodiment and the drawing. In the drawing:
Fig. 1 shows a schematically represented side view of an exemplary embodiment of the invention; and
Fig. 2 shows details of the side view represented in Fig. 1, while the headlight and rear light have been represented in a partly cutaway manner.

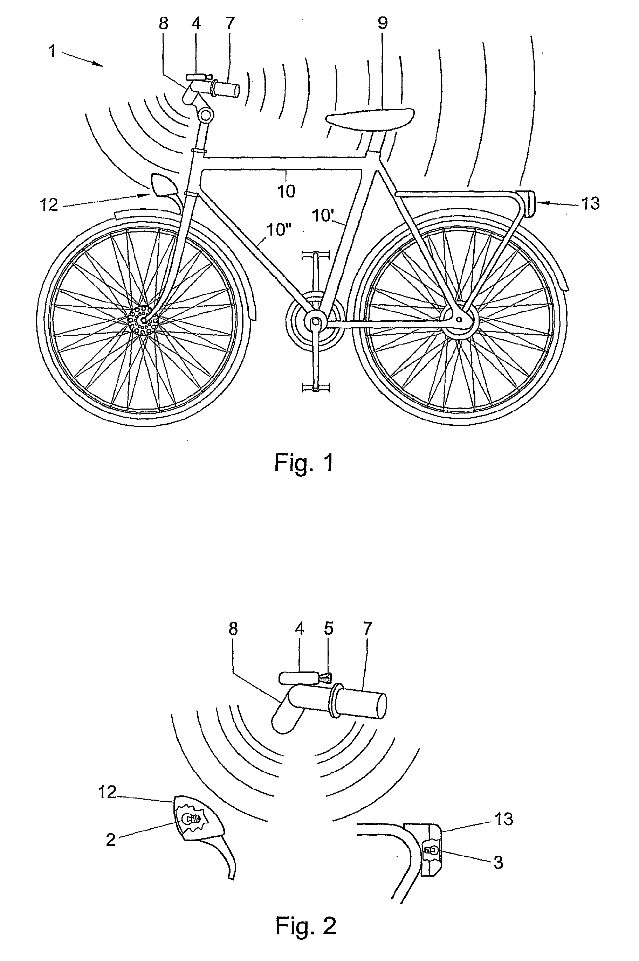

Fig. 1 shows a bicycle 1, which is provided with a main lighting system comprising at least one bicycle light. In the present exemplary embodiment, the main lighting system comprises a headlight 12 and a rear light 13. The bicycle further comprises a handlebar 8, a seat 9 and a frame 10 which extends between the handlebar 8 and the seat 9.

The headlight 12 is mounted above a front wheel of the bicycle. Naturally, the headlight 12 can also be mounted on other positions, for instance adjacent the wheel or the like. The headlight is provided with at least one light source 2, which is schematically shown in Fig. 2. The headlight 12 is further provided with, or can be coupled to a power source (not shown). The rear light 13, located, for instance, adjacent the rear wheel, also comprises at least one light source 3, as well as a power source (not shown). Each of these power sources can comprise, for instance, at least one accumulator, battery, fuel cell, solar cell, dynamo and/or other power source. A dynamo for instance can be used as direct voltage source of one or each of the lights 12, 13. In addition, such a dynamo or solar cell can be provided, for instance, for charging one or more accumulators functioning as power source.

Both bicycle lights 12, 13 are designed to be wirelessly controlled by a remote control 4. According to the invention, this remote control 4 is provided on the bicycle 1, at a position which - during cycling - can be reached by a cyclist present on the seat 9. To that end, in the present exemplary embodiment, the remote control is provided on the handlebar 8, which is a position that can be reached well by the cyclist. Preferably, the remote control 4 is located near, on and/or in a handgrip 7 of the handlebar 8, so that the cyclist can reach the remote control 4 without large movements of the hands. Moreover, a position on or near the handgrip 7 is advantageous for allowing the signals, transmitted by the remote control 4, to reach the headlight 12 and rear light 13 relatively unhindered. In an alternative position, the remote control 4 is provided on the frame, for instance a frame part 10, 10', 10" of the bicycle 1.

The remote control 4 is provided with control means, in particular a switch 5 which, for the purpose of controlling, can be switched between an ON-position and an OFF-position. The switch 5 comprises a control element, for instance pivotable, rotatable and/or impressible between these positions. The remote control 4 is further provided with first communicating means, while each of the bicycle lights 12, 13 is provided with second communicating means for enabling the wireless control mentioned. The first and second communicating means have not been represented in the drawing. Such communicating means are known from practice, see for instance the above-mentioned Dutch publication NL 9400218, and can for instance comprise electronics, one or more microcontrollers, transmitter and receiver means and the like. The communicating means are for instance designed to communicate by means of radio signals. Communication can further take place by one or more analogous and/or digital signals. Each signal can, for instance, be transmitted a number of times. In the exemplary embodiment, the first communicating means are provided on the handlebar 8 of the bicycle 1, adjacent the switch 5. Alternatively, the first communicating means may be positioned at a distance from the switch 5. In that case, these first communicating means and the switch 5 can for instance be intercoupled through electric wiring. Preferably, the second communicating means are provided integrally in the respective bicycle light 12, 13, which simplifies mounting. In addition, the second communicating means can be provided at a particular distance from the respective bicycle light 12, 13.

In the present exemplary embodiment, the remote control is designed to wirelessly transmit at least one ON-signal via the first communicating means to the second communicating means when the switch 5 is brought and/or has been brought into the ON-position. These second communicating means are designed to activate the bicycle lights 12, 13 upon receipt of the ON-signal. The light source 2, 3 of the respective bicycle light 12, 13 is then coupled to the respective power source under the influence of the second communicating means. Further, each bicycle light 12, 13 can also be wirelessly deactivated by means of the remote control 4. To this end, the remote control 4 is designed to transmit an OFF-signal to the lights 12, 13 when the switch is in the OFF-position or is brought to the OFF-position, while the second communicating means are designed to disconnect the coupling between each light source 2, 3 and the power source upon receipt of the OFF-signal.

During use, the cyclist can operate both the headlight 12 and the rear light 13 in a safe manner by means of the remote control present in the handlebar 8. To this end, the switch 5 of the remote control 4 is put in the ON-position so that the remote control 4 transmits this ON-signal to the second communicating means. To deactivate the lights 12, 13, the switch 5 can be brought to the associated OFF-position.

According to a further advantageous elaboration of the invention, the light intensity of light generated by the bicycle light 12, 13 is adjustable via the remote control 4. The light intensity can be adjustable, for instance, between relatively strong and relatively weak light, such as between high beam light, dipped beam light and/or parking light. The supply voltage to be supplied to a respective light source 2, 3, can then, for instance, be remotely adjustable via the remote control 4. In addition, each bicycle light 12, 13 can for instance comprise a first and a second light source. The first light source can for instance be relative weak with respect to the second light source. In that case, the first and second light source can be activated via the remote control 4 in a particular order, for instance, the first light source first, and then the second light source. The first light source can then serve, for instance, as a relatively weak standlight, or parking light, while the second light source provides a strong dipped beam light. Such different light sources of a bicycle light 12, 13 can for instance be activated or deactivated simultaneously or, conversely, sequentially. According to the invention, it is advantageous when the control means of the remote control 4, the switch 5 for instance, or a different control element (not shown) are designed for this light intensity regulation.

Further, the remote control 4 can for instance be provided with an ambient light detector, while the remote control 4 is designed to activate the two bicycle lights 12, 13, preferably simultaneously, depending on the level of ambient light detected by this detector. As a result, activating both bicycle lights 12, 13 can be effected automatically, simultaneously, and centrally by the remote control 4 when relatively little or no ambient light is available for cycling safely. In that case, it is preferred that the remote control 4 is designed to activate the lights 12, 13 only during use of the bicycle 1, at least upon movement of the bicycle 1. To this end, the remote control 4 can be provided with a motion detector known from practice. The remote control 4 can for instance be brought into an AUTO-control position, in which position such automated light control based on ambient light takes place, and a MANUAL-position, in which position wireless controlling of the lights 12, 13 can be effected manually via the switch 5, and/or in an OFF-position, in which position the remote control 4 has been switched off.

It is self-evident to the skilled person that the invention is not limited to the exemplary embodiment described. Various modifications are possible within the framework of the invention as set forth in the following claims.

For instance, each bicycle light 12, 13 can be provided with at least one light source 2, 3. Various types of light sources 2, 3 can be used in different combinations in each bicycle light, for instance light bulbs, LEDs, halogen lamps and/or other light sources. Further, the at least one bicycle light 12, 13 can for instance be fixedly or detachably connected to the bicycle 1.

The remote control 4 can be fixedly connected to the bicycle 1, for instance by integrating it in a part of the bicycle 1, in particular in the handlebar 8 of the bicycle 1 and/or a frame 10, 10', 10" of the bicycle. In addition, the remote control 4 can be detachably coupled to the bicycle 1. For the purpose of detachable coupling, the remote control 4 can be provided with coupling means (not shown), for instance snap means, clamping means, a detachable nut/bolt connection, Velcro-tape means and/or the like.

The bicycle 1 can be designed in various manners, for instance as a bicycle driven by muscle power, a motor bike or the like.

Further, the communication means can be designed in various manners, for instance for allowing one-way, or two-way communication. With one-way communication, only one or more signals are transmitted by the first communication means to the second communication means for activating the two lights 12, 13. With two-way communication, the second communication means can be designed for transmitting, after receiving a first signal from the first communicating means, a second signal to the first communication means, in particular for the purpose of confirmation of receipt of the first signal. After receipt of this second signal, the first communicating means need no longer transmit the first signal, which saves energy.

In addition, from the above, it follows that the at least one bicycle light 12, 13 according to the present invention can be controlled entirely independently of the operation of the other control elements of the bicycle such as the handlebar and a bicycle brake by means of the remote control 4. Preferably, the control of a bicycle light carried out under the influence of the remote control 4 further comprises switching this light on when the light is still off, and switching it off when the light has been activated.

## Claims

1. A bicycle provided with at least one bicycle light (12, 13) and a wireless remote control (4), wherein said bicycle light (12, 13) is designed to be controlled by said wireless remote control (4), **characterized in that** said remote control (4) is located at a position on the bicycle such that the remote control (4) can be reached by a cyclist present on the seat (9) of the bicycle (1).

2. A bicycle according to claim 1, wherein the bicycle (1) is provided with at least two bicycle lights, in particular a headlight (12) and a rear light (13) which are each wirelessly controllable by said remote control (4).

3. A bicycle according to claim 1 or 2, wherein the remote control (4) is provided on a handlebar (8) of the bicycle (1).

4. A bicycle according to any one of the preceding claims, wherein the remote control (4) is provided on a frame (10, 10', 10") of the bicycle (1).

5. A bicycle according to any one of the preceding claims, wherein the light intensity of the light generated by said bicycle light (12, 13) is adjustable via said remote control (4).

6. A bicycle according to any one of the preceding claims, provided with at least one power source, wherein each bicycle light (12, 13) comprises at least one light source (2, 3) which light source, under the influence of said wireless remote control (4), can be coupled to said power source for the purpose of activating the respective bicycle light (12, 13).

7. A bicycle according to claim 6, wherein said at least one power source comprises at least one accumulator and/or battery.

8. A bicycle according to claim 6 or 7, wherein said at least one power source comprises at least one dynamo.

9. A bicycle according to any one of claims 6 - 8, wherein each said bicycle light (12) comprises at least a first and a second light source.

10. A bicycle according to claim 9, wherein said first and second light source can be activated in a particular order by the remote control (4).

11. A bicycle according to any one of the preceding claims, wherein said remote control (4) is detachably coupled to the bicycle (1).

12. A bicycle according to any one of claims 1 - 10, wherein said remote control (4) is integrated in a part (8; 10, 10', 10") of the bicycle (1).

13. A bicycle according to any one of the preceding claims, wherein the remote control (4) is provided with first communicating means, while said bicycle light (12, 13) is provided with second communicating means, the first communicating means being designed to wirelessly transmit at least a first signal to said second communicating means, while the second communicating means are designed to activate the said bicycle light (12, 13) after receipt of the said first signal.

14. A bicycle according to claim 13, wherein each said bicycle light (12, 13) is integrally provided with said second communication means.

15. A bicycle according to claim 13 or 14, wherein the second communicating means are designed for transmitting, after receipt of said first signal, a second signal to the first communicating means in particular for the purpose of confirmation of receipt.

16. A bicycle according to any one of the preceding claims, wherein the remote control (4) is provided with manually controllable control means, in particular at least one switch (5), which control means are located at a position on the bicycle (1) such that the control means can be reached by the cyclist present on the seat (9) of the bicycle (1).

17. A bicycle according to any one of the preceding claims, wherein the remote control (4) is provided with an ambient light detector, the remote control (4) being designed to activate said bicycle light (12, 13) depending on the level of the ambient light detected by said detector.

18. A bicycle according to any one of the preceding claims, wherein the said at least one bicycle light (12, 13) can be wirelessly activated and deactivated by means of the remote control (4).

19. A bicycle according to any one of the preceding claims, wherein said remote control can be operated independently of the operation of other bicycle control means such as the handlebar and a bicycle brake.

20. A remote control of a bicycle (1) according to any one of the preceding claims.

21. A remote control according to claim 20, wherein the remote control (4) is provided with coupling means for detachably coupling the remote control (4) to the bicycle.

22. An assembly of a remote control (4) according to claim 20 or 21 and at least one bicycle light (12, 13) in particular a head light and a rear light, which bicycle light is designed to be controlled by said wireless remote control (4).

23. A handlebar provided with a remote control according to claim 20 or 21.
